# EUROPEAN PATENT SPECIFICATION

(11) **EP 3 434 567 B1**
(45) Date of publication and mention of the grant of the patent: **02.06.2021**
(21) Application number: 18185101.5
(22) Date of filing: 24.07.2018
(51) Int. Cl.: B62J 7/08, B62J 11/00, B62J 15/00

(54) **BICYCLE COMPONENT**
FAHRRADKOMPONENTE
COMPOSANT DE BICYCLETTE

(30) Priority: 25.07.2017 BE 201705521
(43) Date of publication of application: 30.01.2019
(73) Proprietor: Curana Invest bvba, 8850 Ardooie (BE)
(72) Inventor: VENS, Dirk, 8800 ROESELARE (BE)
(74) Representative: Cardoen, Annelies Andréa C.

(56) References cited:
- EP-A1- 0 642 971
- DE-U1-202007 007 576
- JP-A- 2008 121 184
- JP-U- S57 159 894
- NL-A- 7 213 563
- TW-U- M 524 298

## Description

The present invention relates to a bicycle component comprising a base element having a wall surface on which a coupling means for releasably coupling an accessory to the bicycle component is provided, wherein the coupling means comprises at least one coupling space, wherein the bicycle component comprises a flexible cover layer connected to the base element which is made from an elastic material, wherein this cover layer, in the extended position, extends along at least part of the wall surface and in doing so covers the coupling means, in that the cover layer, in a first position in which the bicycle component is not coupled to the accessory, forms a continuous surface which extends over the coupling space in a streamlined manner.

The present invention also relates to an assembly of such a bicycle component and an associated accessory.

Such a bicycle component is described in DE 202007007576 U1. A bicycle component may denote a mudguard, a luggage carrier, a frame, a handlebar, etc. A common characteristic of these bicycle components is that it may be desirable to attach a bicycle accessory to these bicycle components. A bicycle accessory may be, for example, a lighting element, a bell, a drinking bottle, an element for attaching a bicycle bag, an element for attaching a detachable bicycle light, a GPS holder, etc. A bicycle accessory may also be a corresponding coupling means in itself, which is in that case provided in order to be connected to a bell, a lighting element, etc.

In order to be able to couple an accessory to a bicycle component, this bicycle component is provided with one or more coupling means, with this accessory being couplable to one or more of these coupling means in order to attach the accessory to the bicycle component. Often, these one or more coupling means are already attached to the wall surface in advance or are formed by the wall surface itself. It is also possible to drill or punch holes in advance in well-defined locations. This is to ensure that the necessary accessories can be attached to the bicycle component. The drawback of this is that said coupling means is visible when there is no bicycle accessory attached to this coupling means. When producing standard bicycle components, this bicycle component will usually be provided with one or more coupling means. However, not everyone wishes to use all of these coupling means. As a result, said bicycle component has an appearance which is not very aesthetically pleasing. These coupling means are also susceptible to damage when there is no accessory attached to them. Moreover, not all bicycles are identical, as a result of which not all coupling means are in the correct place and/or it is necessary to provide many different types of bicycle components. In order to solve this latter problem, it is also possible to provide the coupling means on the bicycle component afterwards, when the type of bicycle for which the bicycle component will be used is clear. However, it is cumbersome to provide these coupling means afterwards.

To improve the appearance of such a bicycle component, it is for example possible to provide covering caps or the like or detachable coupling means. However, these covering caps and detachable coupling means may be lost. Although they are able to somewhat improve the appearance, the problem remains that the bicycle component has a different appearance at the location of the coupling means.

It is therefore an object of the invention to produce a bicycle component having one or more coupling means, the appearance of which is perceived as more aesthetically pleasing and with the one or more coupling means being less susceptible to damage.

This object is achieved by providing a bicycle component comprising a base element having a wall surface on which a coupling means for releasably coupling an accessory to the bicycle component is provided, wherein the coupling means comprises at least one coupling space, wherein the bicycle component comprises a flexible cover layer connected to the base element which is made from an elastic material, wherein this cover layer, in the extended position, extends along at least part of the wall surface and in doing so covers the coupling means, in that the cover layer, in a first position in which the bicycle component is not coupled to the accessory, forms a continuous surface which extends over the coupling space in a streamlined manner, in that the cover layer is further extensible from the first position to a second position in which the cover layer is situated partially in the coupling space, so that the coupling space is accessible in order to couple an accessory to the bicycle component.

In the first position, this cover layer covers the coupling space and extends over the coupling space, in other words next to the coupling space. This coupling space is thus protected by the cover layer in the first position and the coupling space is not visible. However, as this cover layer is made from an elastic material, it is possible to stretch the cover layer and thus insert it into the coupling space. The coupling space thus remains accessible for the accessory if necessary. In other words, the cover layer is stretched along the wall surface in the first position and thus covers the entry to the coupling space in a taut manner. The entry is thus spanned by the cover layer when there are no accessories attached to the bicycle component, in other words when the bicycle component is free of accessories. As a result, this coupling space is covered by the cover layer in the first position in a virtually invisible manner.

As the cover layer is elastic and flexible, it is possible, if desired, to further stretch the cover layer and thus insert it partially into the coupling space, so that this coupling space is accessible for the accessory which is to be inserted at least partially into this coupling space in order to be able to couple the accessory to the bicycle component. Although the coupling means is covered by the cover layer and the coupling space is hidden when there is no accessory connected to the bicycle component, it is still readily possible to access this coupling space and to couple an accessory to the bicycle component. In this case, the cover layer preferably forms (a part of) the visible outer side of the bicycle component. In order to move from the first position to the second position, the cover layer is inserted into the coupling space through the entry of the coupling space.

This coupling space may be a cavity, an indentation, a slot, a groove, a passage, for example a passage through the base element, etc. The cross section of the coupling space may then, for example, be delimited by two, three or more sides. The accessory which needs to be attached to the coupling means preferably comprises a second coupling means which is compatible with the coupling means. For example, a second coupling means which can (partially) engage securely in the coupling space and/or can be secured therein. The connection may be a clamping connection, with the accessory being clamped in the coupling means or the coupling means being clamped in the accessory. However, it may also be a click-fit connection or another type of positive lock. When an accessory is connected to the coupling means, the cover layer forms an intermediate layer between the accessory and the surface of the coupling space. Here, the cover layer is then situated between the wall of the coupling space and the wall of the accessory. Providing a coupling means may denote that the wall surface forms the coupling means or that there is a coupling means attached to the wall surface. One or more said coupling means may be provided.

Preferably, the cover layer will extend back into a stretched position and extend next to the coupling space after an accessory connected to the bicycle component has been removed from the bicycle component again.

Preferably, the cover layer forms a continuous surface with smooth transitions in the first position. In this case, the cover layer then forms a streamlined surface so that the appearance of the bicycle component in the first position is perceived as very aesthetically pleasing. As the cover layer is made from an elastic material and the cover layer is tensioned/stretched along the wall surface of the base element, it is easy to form a streamlined surface.

In a preferred embodiment, the wall surface forms the at least one coupling space. In this case, it is therefore not necessary to provide additional coupling means which are attached to the base element and the base element in itself thus forms the coupling means. To this end, the base element is given the desired form. This can be done, for example, via injection moulding and/or extrusion.

Further preferably, the cover layer is extensible such that the cover layer may adjoin at least a part of the wall surface which forms the coupling space. When stretching the cover layer in the coupling space, at least a part of the cover layer will adjoin the wall surface so that the cover layer can take the form of the coupling space at least in part. As a result, the coupling space is very readily accessible for an accessory. This also means that an accessory comprising a coupling body which is at least partially form-fitting with the coupling space is readily connectable to the bicycle component. The play between the accessory and the bicycle component may thus be limited here, resulting in a strong connection.

Also further preferably, the coupling space is accessible through an opening formed in the wall surface, wherein the cover layer covers this opening in the first position, and wherein the wall surface forms a coupling edge with an undercut at the location of the opening. This coupling edge is then able to retain the accessory in the coupling space. If the accessory comprises a coupling body, for example, this coupling body can then be retained by the coupling edge.

In an alternative embodiment, the coupling space is a passage through the base element. The cover layer then preferably closes off one end of this passage in the first position.

In a preferred embodiment, a said coupling space comprises at least a groove. Even more preferably, the coupling space is a groove. The entry to this coupling space then preferably also extends in the longitudinal direction of the groove. The groove may have a straight path, but may also, for example, have a certain non-straight path. For instance, the groove may extend along an arc, in which case this arc is the longitudinal direction. The path of the groove may depend on the bicycle component. For example, if the bicycle component is a mudguard which, in the position in which it is connected to the bicycle, extends from the rear to the front along a certain arc, the groove may then also extend from the rear to the front along this arc at the top of the mudguard and the longitudinal direction extends along this arc. The groove is then accessible to the accessory at the top via its entry, the opening.

The advantage of working with a groove is that it is possible to connect the accessory to several places in the groove and it is thus possible to choose where to attach the accessory to the bicycle component. It is thus possible to choose where to attach the accessory to the bicycle component, namely the mudguard, the luggage carrier, the frame, the handlebar, etc. A groove therefore provides freedom of choice. Grooves are also simple to design. For instance, base elements provided with grooves can be produced via extrusion. In that case, these grooves are preferably formed by the wall surface of the base element. For example, if the bicycle component is a mudguard, it is possible to form a base element via extrusion in the form of a mudguard, with the exception of the groove which constitutes a deviation from this mudguard form. However, by then stretching the cover layer over this groove and thus covering the entry to this groove, the cover layer and the base element once again are together in the form of a mudguard in the first position of the bicycle component.

One or more such grooves can be provided on the wall surface, with each groove separately serving as coupling means or with two or more grooves together serving as coupling means.

Cables may also be provided in such a groove, for example electrical cables, meaning that the coupling space can also additionally serve as a cable holder. By arranging any cables in the coupling space, these cables are protected by the coupling space and the cover layer, meaning that they will not hinder the user of the bicycle, will not become dirty and cannot be damaged by moving parts of the bicycle.

In a specific embodiment, the coupling means comprises at least two coupling spaces. Using two coupling spaces, it is readily possible to clamp an accessory to the bicycle component.

In a preferred embodiment, the cover layer has an elongation at break in the longitudinal direction which is higher than 50% and/or an elongation at break in the transverse direction which is higher than 150%. This elongation at break may be determined, for example, by ISO 1421. The elongation at break indicates that the cover layer will break only beyond a certain elongation. Given the high elongation at break, this means that this cover layer can be stretched by a certain amount, as a result of which it is extremely suitable to be stretched/tensioned along the wall surface of the base element and may additionally be brought into the coupling space, without there being any risk of the cover layer breaking/tearing. Even more preferably, the elongation at break in the longitudinal direction is higher than 60%, and even higher than 70%. Even more preferably, the elongation at break in the transverse direction is higher than 160%, and even higher than 170%. In a specific embodiment, the elongation at break in the longitudinal direction corresponds to the elongation at break in the transverse direction.

Preferably, the cover layer has a tensile strength in the longitudinal direction which is higher than 20 daN/5 cm and/or a tensile strength in the transverse direction which is higher than 15 daN/5 cm. This tensile strength may be determined, for example, by ISO 1421. Even more preferably, the tensile strength in the longitudinal direction is higher than 25 daN/5 cm, even more preferably higher than 30 daN/5 cm. Even more preferably, the tensile strength in the transverse direction is higher than 20 daN/5 cm. In this case, the cover layer is sufficiently strong to span the wall surface for a long period of time and perform its covering function for a long period of time. In a specific embodiment, the tensile strength in the longitudinal direction corresponds to the tensile strength in the transverse direction.

In a preferred embodiment, the cover layer has an elongation of more than 5% on application of a force of 50 N in the longitudinal direction and/or an elongation of more than 10% on application of a force of 50 N in the transverse direction. This may be determined, for example, by ISO 1421. This means that a person is able to stretch the cover layer and thus insert it into the coupling space when an accessory is to be coupled to the bicycle component. The cover layer further preferably has an elongation of more than 8% on application of a force of 50 N in the longitudinal direction. The cover layer further preferably has an elongation of more than 13% on application of a force of 50 N in the transverse direction.

Preferably, the thickness of the cover layer is between 0.1 mm and 3 mm. At these thicknesses, the cover layer is sufficiently strong and impenetrable. At these thicknesses, the cover layer forms only a thin intermediate layer between the accessory and the surface of the coupling space when the accessory is connected to the bicycle component, as a result of which the coupling space can be used virtually to its full extent. Further preferably, the thickness of the cover layer is between 0.5 and 1.5 mm, even more preferably between 0.8 and 1.2 mm.

In a highly preferred embodiment, the cover layer is made from a water-repellent material. This water-repellent material is further preferably also a material which is impermeable to water. Since bicycles are exposed to the environment, they may also come into contact with rain. As the intention is for the coupling space to remain free of water, the cover layer is preferably made from a water-repellent material so that the coupling space remains free of water in all circumstances.

The cover layer is preferably made from a plastic material, this plastic material preferably comprising at least 85% polyvinyl chloride. Possible compositions are, for example, the following: 88-94% polyvinyl chloride, 0.1-2% polyurethane and 4-10% polyamide or 91-97% polyvinyl chloride and 3-9% polyamide. Such plastic materials are sufficiently elastic, strong and water-repellent and are thus a suitable material from which to make the cover layer. Other usable plastic materials comprise polyurethane, synthetic rubber, etc.

In a highly preferred embodiment, the cover layer is releasably connected to the base element. In this way, the cover layer can be removed again if desired, for example if one wishes to change the appearance of the bicycle component, since the cover layer can be provided in the desired colour/pattern/print. In this way, a mudguard, a luggage carrier, a frame, a handlebar, etc. can be configured in an aesthetically pleasing manner. Should the cover layer become damaged, it is also readily possible to replace the cover layer.

Preferably, the cover layer is connected to fixing means and the base element comprises fixing elements corresponding to these fixing means, so that the cover layer is connected to the base element using said fixing means. These fixing means and fixing elements preferably create a releasable connection. Using fixing means, it is readily possible to stretch the cover layer along the wall surface.

Further preferably, the fixing means comprise profiles, and the fixing elements are accommodated in these profiles by click action. These profiles may, for example, be connected to the cover layer by means of (ultrasonic) welding or by means of adhesive bonding. If the bicycle component is a mudguard and the base element is a profile which extends along an arc, the side edges of the base element, when viewed along this arc, may thus form the fixing elements, for example. The cover layer is then click-fitted onto the side edges of the base element and can thus cover the wall surface.

Also further preferably, the fixing means form coupling means for releasably coupling an element to the bicycle component. In this way, elements such as mudflaps, attachment tubes, dress guards, etc. can also be attached to the bicycle component at the location of the fixing means.

In a preferred embodiment, the base element is made from plastic or metal. For instance, the base element may be a profile with hollow spaces or grooves, with these hollow spaces or grooves being said coupling spaces. Making the base element from plastic or metal means that the base element can be configured to be sufficiently strong and rigid, so that the bicycle component has a certain strength and rigidity. The base element may, however, also have a certain flexibility. If the bicycle component is a mudguard, for example, the base element still has a certain flexibility, meaning that shocks are readily absorbable. The base element may, for example, be made by means of extrusion, but also by means of pultrusion or injection moulding.

In a highly preferred embodiment, the bicycle component is a mudguard. In that case, the base element is preferably virtually in the form of a mudguard, with the one or more coupling means constituting a deviation from this form. The portion of the wall surface of the base element which is provided in order to extend at the top in the position in which the mudguard is connected to the bicycle may thus comprise one or more cavities and/or grooves and/or protrusions, with the cover layer then being stretched along this portion of the wall surface. The openings which provide access to these cavities and/or grooves are then covered by the cover layer and the cover layer then takes the form of the top of a mudguard surface, resulting in an attractive mudguard. The wall surface preferably extends substantially along an arc, except at the one or more openings, as a result of which the cover layer then also extends along this arc when there are no accessories attached to the bicycle component.

When the coupling means comprises a groove, the groove then preferably extends in the longitudinal direction of the mudguard. It is then readily possible to choose the location of the mudguard, viewed in the longitudinal direction of the mudguard, in which to attach the accessory.

Further preferably, the mudguard comprises at least two coupling spaces accessible via an opening and these two coupling spaces are grooves which are parallel to one another. The mudguard then comprises at least one coupling means, with this coupling means comprising two grooves which are parallel to one another. Using these two grooves, it is readily possible to clamp accessories onto the bicycle component. When viewed in the longitudinal direction of the mudguard, the groove is preferably delimited on one side by a part of the base element which faces the opposite side of the groove, in such a way that the groove on said one side comprises a trough-shaped portion with which the accessory can engage.

The object of the invention is also achieved by providing an assembly of a bicycle component and an associated accessory, wherein the bicycle component is a bicycle component as described above and wherein the accessory comprises a second coupling means which is couplable to the coupling means of the bicycle component in an engageable manner.

In this case, the accessory then comprises a coupling means which is compatible with the bicycle component, so that both are readily connectable to one another. The advantages described in respect of the bicycle component also apply to this assembly. When the accessory is connected to the bicycle component, the cover layer forms an intermediate layer between the surface of the coupling means of the accessory and the surface of the coupling space of the bicycle component. Here, the cover layer is then situated between the wall of the coupling space of the bicycle component and the wall of the coupling means of the accessory.

The second coupling means preferably comprises a coupling body which is accommodable in the coupling space in order to attach the second coupling means to the coupling means of the bicycle component. It is simple to couple a coupling body in a coupling space.

Further preferably, the wall surface of the base element forms the at least one coupling space, the coupling space is accessible via an opening formed in the wall surface, wherein the cover layer covers this opening in the first position, the wall surface forms a coupling edge with an undercut at the location of the opening, and the coupling body is retained in the coupling space by the coupling edge.

In the following description, a bicycle component and an accessory according to the present invention are described in more detail. This description serves only to further explain the features of the invention and can therefore not be seen as a limitation of the scope of protection for the present invention defined in the claims of this patent application or of the area of application thereof.

Reference numerals are used in this description to refer to the attached figures, in which:
- ***Figure 1*** shows a cross section of a mudguard according to the invention;
- ***Figure 2*** shows a cross section of the mudguard shown in Figure 1, in which an accessory is attached to the mudguard;

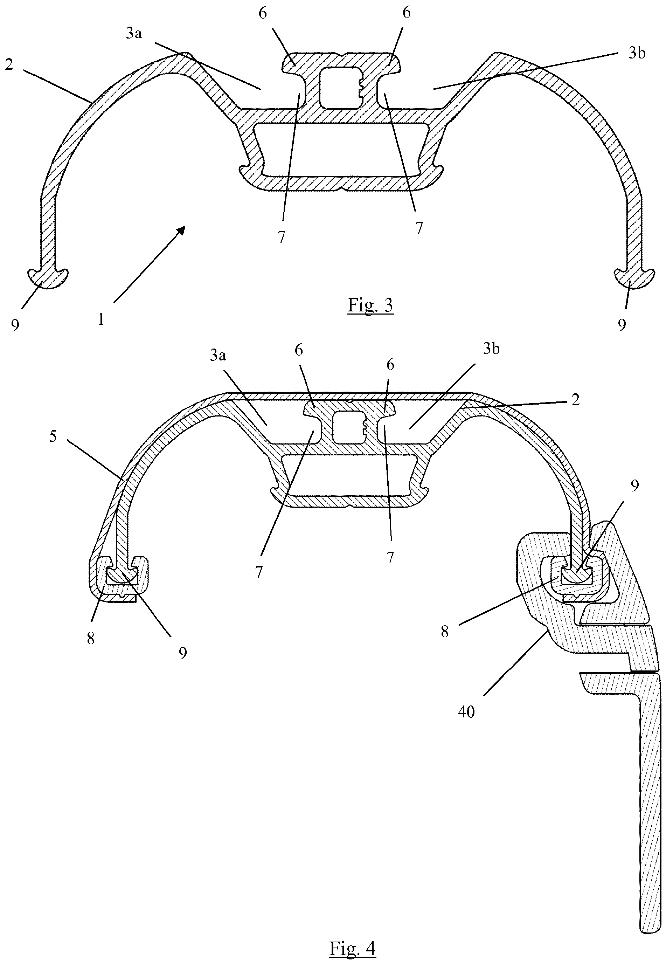

- ***Figure 3*** shows a cross section of the base element of the mudguard shown in Figure 1;
- ***Figure 4*** shows a cross section of the mudguard shown in Figure 1, in which a dress guard is attached to the mudguard;
- ***Figure 5*** shows a detail of a perspective view of a bicycle comprising a mudguard as shown in Figure 1, in which an accessory is attached to the mudguard;
- ***Figure 6*** is a detail of a perspective view of the base element shown in Figure 3;
- ***Figure 7*** is a detail of a perspective view of the mudguard shown in Figure 1, in which an accessory is attached to the mudguard.

In the figures is shown a bicycle component (11) and an accessory (4) which is attachable to this bicycle component (11). The bicycle component (11) shown in the figures is a mudguard (11).

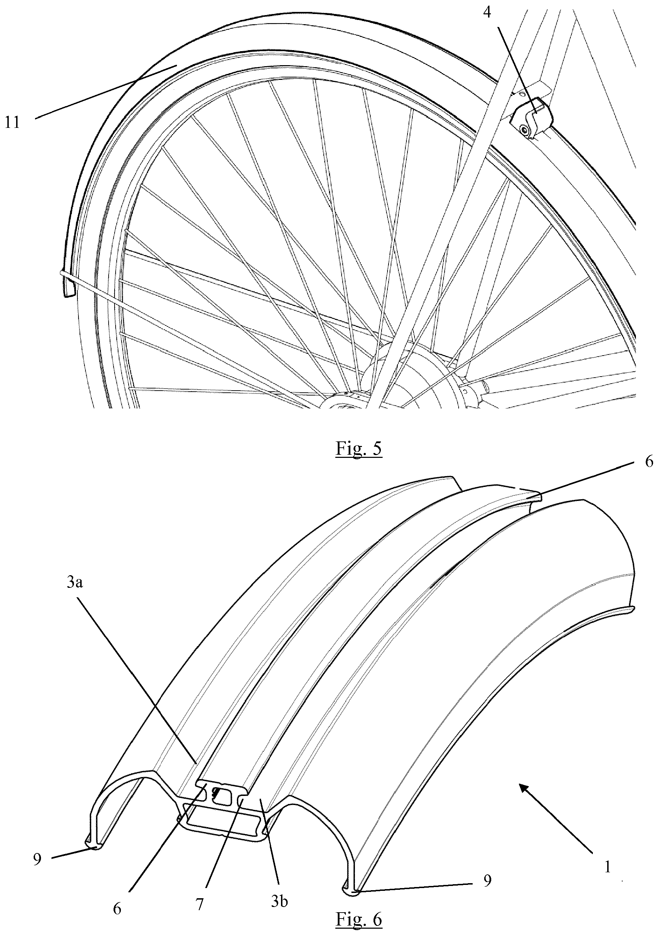

This mudguard (11) comprises a base element (1). This base element (1) is made from aluminium and produced by means of extrusion. The base element (1) is a profile which extends along an arc, as a result of which it is highly suitable for extending next to a part of a bicycle wheel. This base element (1) in this case comprises an underside which is provided for extending above a bicycle wheel (see Figure 5) and a top side which is situated opposite the underside, the wall surface (2) of which top side forms two grooves (3a, 3b). These two grooves (3a, 3b) are two coupling spaces (3a, 3b) and in this case form a coupling means with which said accessory (4) is couplable.

This mudguard (11) also comprises a flexible cover layer (5), with the edges of the cover layer (5) each respectively being connected by means of ultrasonic welding to a hollow profile (8) which extends along an arc. When viewed in the longitudinal direction of the base element (1), the edges of the base element (1) form fixing elements (9) which are accommodable by click action in the profiles (8) which are connected to the cover layer (5). The cover layer (5) is in this case connected to the base element (1) by clicking the profiles (8) onto the fixing elements (9).

The flexible cover layer (5) is made from an elastic plastic material which comprises at least 85% polyvinyl chloride (PVC). This material can thus be referred to using the term PVC stretch. This cover layer (5) is connected to the base element (1) in such a way that this cover layer (5), in the stretched position, extends along the wall surface (2) of the top side of the base element (1), thus covering the grooves (3a, 3b). In a first position in which the mudguard (11) is not coupled to said accessory (4), it forms a continuous and streamlined surface and extends along the openings which provide access to the respective grooves (3a, 3b). In other words, the cover layer (5) adjoins the wall surface (2) except for at the grooves (3a, 3b) and is thus pulled taut over the grooves (3a, 3b) so that they are not visible and these grooves (3a, 3b) are covered in the first position. This cover layer (5) is further stretchable from the first position into a second position in which the cover layer (5) is situated partially in the grooves (3a, 3b), so that these grooves (3a, 3b) are accessible in order to couple said accessory (4) to the mudguard (11). To this end, said accessory (4) comprises a coupling body (10) which is engageable with the grooves (3a, 3b).

In the first position, the mudguard (11) thus has a streamlined appearance and the grooves (3a, 3b) are virtually invisible and therefore do not disturb the appearance of the mudguard (11). The appearance of the mudguard (11) is therefore aesthetically pleasing. However, as the cover layer (5) is elastic and is insertable into the grooves (3a, 3b), these grooves (3a, 3b) still remain accessible to an accessory (4) which is to be coupled to the mudguard (11) with the aid of these grooves (3a, 3b). When the accessory (4) is coupled to the mudguard (11), the cover layer (5) in this case forms an intermediate layer between the accessory (4) and the base element (1).

The form of the grooves (3a, 3b) is as follows: At the location of the respective opening through which the groove (3a, 3b) is accessible, the wall surface (2) of the top side of the base element (1) forms a coupling edge (6) with an undercut (7). The coupling body (10) of the accessory (4) may engage with this undercut (7), with the coupling body (10) being retained in this undercut (7) by the coupling edge (6). The coupling body (10) comprises two parts which can be moved towards one another with the aid of a screw (12), so that these two parts can be clamped around the coupling edges (6) of the two grooves (3a, 3b).

The cover layer (5) is further water-impermeable and water-repellent so that no water, such as rainwater, can reach the grooves (3a, 3b) and these grooves (3a, 3b) are always readily accessible to accessories (4).

As the cover layer (5) is connected to the base element (1) with the aid of profiles (8), it is also possible to couple additional elements to these profiles (8), such as a dress guard (40), for example.

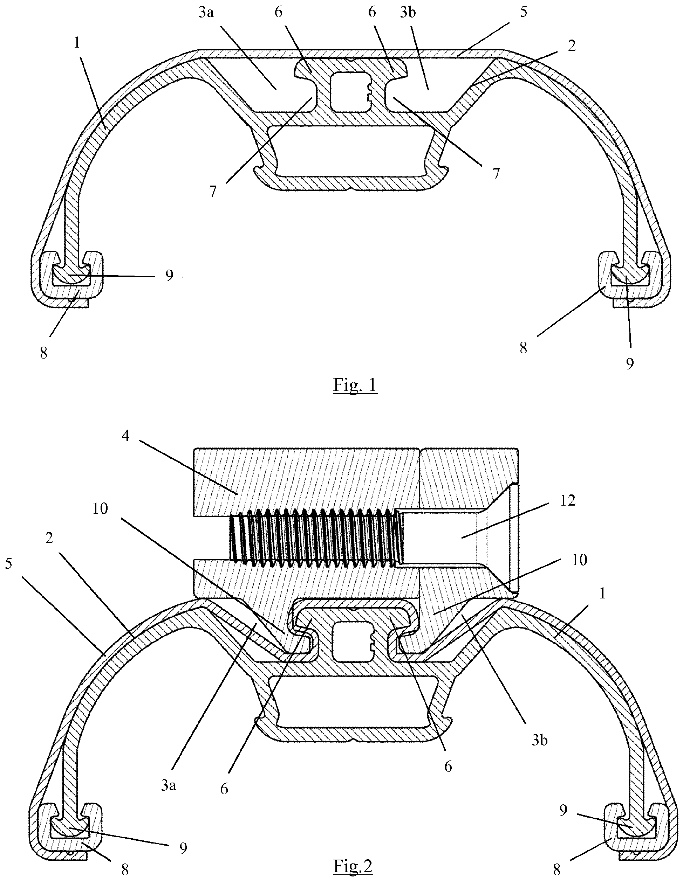

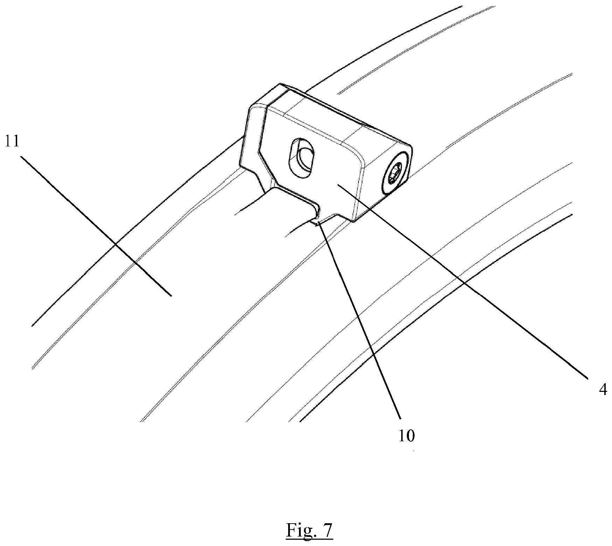

In a second position, at least one accessory (4) is connected to the mudguard (11). In this case, the cover layer (5) will extend in a streamlined manner along the wall surface (2), except for at the location of the accessory (4). At the location of the accessory (4), the cover layer (5) extends in the grooves (3a, 3b) and an indentation is visible at the location of the accessory (4). This can clearly be seen in Figures 2 and 7. However, this indentation is limited so that the mudguard (11) still has a pleasing overall appearance. If it is desired to remove the accessory (4) after a certain amount of time or attach it to the mudguard (11) in another place, the accessory (4) may be removed and the cover layer (5) will once again extend in virtually its first position.

## Claims

1. Bicycle component (11) comprising a base element (1) having a wall surface (2) on which a coupling means for releasably coupling an accessory (4) to the bicycle component (11) is provided, wherein the coupling means comprises at least one coupling space (3a, 3b), wherein the bicycle component (11) comprises a flexible cover layer (5) connected to the base element (1) which is made from an elastic material, wherein this cover layer (5), in the extended position, extends along at least part of the wall surface (2) and in doing so covers the coupling means, in that the cover layer (5), in a first position in which the bicycle component (11) is not coupled to the accessory (4), forms a continuous surface which extends over the coupling space (3a, 3b) in a streamlined manner, **characterized in that** the cover layer (5) is further extensible from the first position to a second position in which the cover layer (5) is situated partially in the coupling space (3a, 3b), so that the coupling space (3a, 3b) is accessible in order to couple an accessory (4) to the bicycle component (11).

2. Bicycle component (11) according to Claim 1, **characterized in that** the cover layer (5) forms a continuous surface with smooth transitions in the first position.

3. Bicycle component (11) according to Claim 1 or 2, **characterized in that** the wall surface (2) forms the at least one coupling space (3a, 3b).

4. Bicycle component (11) according to Claim 3, **characterized in that** the cover layer (5) is extensible such that the cover layer (5) may adjoin at least a part of the wall surface (2) which forms the coupling space (3a, 3b).

5. Bicycle component (11) according to Claim 3 or 4, **characterized in that** the coupling space (3a, 3b) is accessible through an opening formed in the wall surface (2), wherein the cover layer (5) covers this opening in the first position, and wherein the wall surface (2) forms a coupling edge (6) with an undercut (7) at the location of the opening.

6. Bicycle component (11) according to one of the preceding claims, **characterized in that** a said coupling space (3a, 3b) comprises at least a groove.

7. Bicycle component (11) according to one of the preceding claims, **characterized in that** the coupling means comprises at least two coupling spaces (3a, 3b).

8. Bicycle component (11) according to one of the preceding claims, **characterized in that** the thickness of the cover layer (5) is between 0.1 mm and 3 mm.

9. Bicycle component (11) according to one of the preceding claims, **characterized in that** the cover layer (5) is made from a water-repellent material.

10. Bicycle component (11) according to one of the preceding claims, **characterized in that** the cover layer (5) is releasably connected to the base element (1).

11. Bicycle component (11) according to claim 10, **characterized in that** the cover layer (5) is connected to fixing means (8) and the base element (1) comprises fixing elements (9) corresponding to these fixing means (8), so that the cover layer (5) is connected to the base element (1) using said fixing means (8).

12. Bicycle component (11) according to Claim 11, **characterized in that** the fixing means (8) comprise profiles (8), and the fixing elements (9) are accommodated in these profiles (8) by click action.

13. Bicycle component (11) according to one of the preceding claims, **characterized in that** the base element (1) is made from plastic or metal.

14. Assembly of a bicycle component (11) and an associated accessory (4), **characterized in that** the bicycle component (11) is a bicycle component (11) according to one of Claims 1 to 13 and **in that** the accessory (4) comprises a second coupling means which is couplable to the coupling means of the bicycle component (11) in an engageable manner.

15. Assembly according to Claim 14, **characterized in that** the second coupling means comprises a coupling body (10) which is accommodable in the coupling space (3a, 3b) in order to attach the second coupling means to the coupling means of the bicycle component (11).

## Patentansprüche

1. Fahrradkomponente (11) umfassend ein Basiselement (1) das eine Wandfläche (2) aufweist auf der eine Kopplungseinrichtung zum lösbaren Koppeln eines Zubehörteil (4) an der Fahrradkomponente (11) vorgesehen ist, wobei die Kopplungseinrichtung mindestens einen Kopplungsraum (3a, 3b) umfasst, wobei die Fahrradkomponente (11) eine mit dem Basiselement (1) verbundene flexible Abdeckungsschicht (5) umfasst die aus einem elastischen Material besteht, wobei sich diese Abdeckungsschicht (5), in der ausgedehnten Stellung, entlang zumindest eines Teils der Wandfläche (2) erstreckt und dadurch die Kopplungseinrichtung abdeckt, dass die Abdeckungsschicht (5), in einer ersten Stellung in der die Fahrradkomponente (11) nicht mit dem Zubehörteil (4) gekoppelt ist, eine durchgehende Fläche ausbildet die sich stromlinienförmig über den Kopplungsraum (3a, 3b) erstreckt, **dadurch gekennzeichnet, dass** die Abdeckungsschicht (5) ferner von der ersten Stellung in eine zweite Stellung, in der sich die Abdeckungsschicht (5) teilweise im Kopplungsraum (3a, 3b) befindet, ausdehnbar ist, sodass der Kopplungsraum (3a, 3b) zugänglich ist um ein Zubehörteil (4) mit der Fahrradkomponente (11) zu koppeln.

2. Fahrradkomponente (11) nach Anspruch 1, **dadurch gekennzeichnet, dass** die Abdeckungsschicht (5) in der ersten Stellung eine durchgehende Fläche mit glatten Übergängen ausbildet.

3. Fahrradkomponente (11) nach Anspruch 1 oder 2, **dadurch gekennzeichnet, dass** die Wandfläche (2) den mindestens einen Kopplungsraum (3a, 3b) ausbildet.

4. Fahrradkomponente (11) nach Anspruch 3, **dadurch gekennzeichnet, dass** die Abdeckungsschicht (5) derart ausdehnbar ist dass die Abdeckungsschicht (5) zumindest an einen Teil der Wandfläche (2) der den Kopplungsraum (3a, 3b) ausbildet angrenzen kann.

5. Fahrradkomponente (11) nach Anspruch 3 oder 4, **dadurch gekennzeichnet, dass** der Kopplungsraum (3a, 3b) durch eine in der Wandfläche (2) ausgebildete Öffnung zugänglich ist, wobei die Abdeckungsschicht (5) diese Öffnung in der ersten Stellung abdeckt und wobei die Wandfläche (2) eine Kopplungskante (6) mit einer Hinterschneidung (7) an der Öffnungsstelle ausbildet.

6. Fahrradkomponente (11) nach einem der vorstehenden Ansprüche, **dadurch gekennzeichnet, dass** der Kopplungsraum (3a, 3b) mindestens eine Nut umfasst.

7. Fahrradkomponente (11) nach einem der vorstehenden Ansprüche, **dadurch gekennzeichnet, dass** die Kopplungseinrichtung mindestens zwei Kopplungsräume (3a, 3b) umfasst.

8. Fahrradkomponente (11) nach einem der vorstehenden Ansprüche, **dadurch gekennzeichnet, dass** die Stärke der Abdeckungsschicht (5) zwischen 0,1 mm und 3 mm beträgt.

9. Fahrradkomponente (11) nach einem der vorstehenden Ansprüche, **dadurch gekennzeichnet, dass** die Abdeckungsschicht (5) aus einem wasserabweisenden Material besteht.

10. Fahrradkomponente (11) nach einem der vorstehenden Ansprüche, **dadurch gekennzeichnet, dass** die Abdeckungsschicht (5) mit dem Basiselement (1) lösbar verbunden ist.

11. Fahrradkomponente (11) nach Anspruch 10, **dadurch gekennzeichnet, dass** die Abdeckungsschicht (5) mit Fixierungseinrichtungen (8) verbunden ist und das Basiselement (1) zu diesen Fixierungseinrichtungen (8) passende Fixierungselemente (9) umfasst, sodass die Abdeckungsschicht (5) unter Verwendung der Fixierungseinrichtungen (8) mit dem Basiselement (1) verbunden ist.

12. Fahrradkomponente (11) nach Anspruch 11, **dadurch gekennzeichnet, dass** die Fixierungseinrichtungen (8) Profile (8) umfassen und die Fixierungselemente (9) in diesen Profilen (8) durch Einrasten aufgenommen sind.

13. Fahrradkomponente (11) nach einem der vorstehenden Ansprüche, **dadurch gekennzeichnet, dass** das Basiselement (1) aus Kunststoff oder Metall besteht.

14. Anordnung einer Fahrradkomponente (11) und eines zugehörigen Zubehörteils (4), **dadurch gekennzeichnet, dass** die Fahrradkomponente (11) eine Fahrradkomponente (11) nach einem der Ansprüche 1 bis 13 ist, und dass das Zubehörteil (4) eine zweite Kopplungseinrichtung umfasst, die mit der Kopplungseinrichtung der Fahrradkomponente (11) eingreifend koppelbar ist.

15. Anordnung nach Anspruch 14, **dadurch gekennzeichnet, dass** die zweite Kopplungseinrichtung einen Kopplungskörper (10) umfasst, der im Kopplungsraum (3a, 3b) aufnehmbar ist, um die zweite Kopplungseinrichtung an der Kopplungseinrichtung der Fahrradkomponente (11) zu befestigen.

## Revendications

1. Composant de bicyclette (11) comprenant un élément de base (1) ayant une surface de paroi (2) sur laquelle est situé un moyen d'accouplement pour l'accouplement amovible d'un accessoire (4) au composant de bicyclette (11), le moyen d'accouplement comprenant au moins un espace d'accouplement (3a, 3b), le composant de bicyclette (11) comprenant une couche de recouvrement flexible (5) reliée à l'élément de base (1) qui est en un matériau élastique, cette couche de recouvrement (5) s'étendant, en position étendue, le long d'au moins une partie de la surface de paroi (2) et ce faisant recouvrant le moyen d'accouplement, en ce que la couche de recouvrement (5), dans une première position dans laquelle le composant de bicyclette (11) n'est pas accouplé à l'accessoire (4), forme une surface continue qui s'étend sur l'espace d'accouplement (3a, 3b) de manière profilée, **caractérisé en ce que** la couche de recouvrement (5) est en outre extensible de la première position à une seconde position dans laquelle la couche de recouvrement (5) est située partiellement dans l'espace d'accouplement (3a, 3b), de sorte que l'espace d'accouplement (3a, 3b) soit accessible afin d'accoupler un accessoire (4) au composant de bicyclette (11).

2. Composant de bicyclette (11) selon la revendication 1, **caractérisé en ce que** la couche de recouvrement (5) forme une surface continue avec des transitions lisses dans la première position.

3. Composant de bicyclette (11) selon la revendication 1 ou 2, **caractérisé en ce que** la surface de paroi (2) forme l'au moins un espace d'accouplement (3a, 3b).

4. Composant de bicyclette (11) selon la revendication 3, **caractérisé en ce que** la couche de recouvrement (5) est extensible de sorte que la couche de recouvrement (5) puisse jouxter au moins une partie de la surface de paroi (2) qui forme l'espace d'accouplement (3a, 3b).

5. Composant de bicyclette (11) selon la revendication 3 ou 4, **caractérisé en ce que** l'espace d'accouplement (3a, 3b) est accessible par une ouverture formée dans la surface de paroi (2), la couche de recouvrement (5) couvrant cette ouverture dans la première position, et la surface de paroi (2) formant un bord d'accouplement (6) avec une contre-dépouille (7) au niveau de l'emplacement de l'ouverture.

6. Composant de bicyclette (11) selon l'une des revendications précédentes, **caractérisée en ce qu'**un espace d'accouplement (3a, 3b) comprend au moins une rainure.

7. Composant de bicyclette (11) selon l'une quelconque des revendications précédentes, **caractérisé en ce que** le moyen d'accouplement comprend au moins deux espaces d'accouplement (3a, 3b).

8. Composant de bicyclette (11) selon l'une des revendications précédentes, **caractérisé en ce que** l'épaisseur de la couche de recouvrement (5) est comprise entre 0,1 mm et 3 mm.

9. Composant de bicyclette (11) selon l'une des revendications précédentes, **caractérisé en ce que** la couche de recouvrement (5) est en un matériau hydrofuge.

10. Composant de bicyclette (11) selon l'une des revendications précédentes, **caractérisé en ce que** la couche de recouvrement (5) est reliée de manière libérable reliée à l'élément de base (1).

11. Composant de bicyclette (11) selon la revendication 10, **caractérisé en ce que** la couche de recouvrement (5) est reliée à un moyen de fixation (8) et l'élément de base (1) comprenant des éléments de fixation (9) correspondant à ces moyens de fixation (8), de sorte que la couche de recouvrement (5) soit reliée à l'élément de base (1) en utilisant ledit moyen de fixation (8).

12. Composant de bicyclette (11) selon la revendication 11, **caractérisé en ce que** le moyen de fixation (8) comprend des profilés (8), et les éléments de fixation (9) sont logés dans ces profilés (8) par encliquetage.

13. Composant de bicyclette (11) selon l'une des revendications précédentes, **caractérisé en ce que** l'élément de base (1) est en plastique ou en métal.

14. Ensemble d'un composant de bicyclette (11) et d'un accessoire associé (4), **caractérisé en ce que** le composant de bicyclette (11) est un composant de bicyclette (11) selon l'une des revendications 1 à 13 et **en ce que** l'accessoire (4) comprend un second moyen d'accouplement qui peut être accouplé au moyen d'accouplement du composant de bicyclette (11) d'une manière pouvant venir en prise.

15. Ensemble selon la revendication 14, **caractérisé en ce que** le second moyen d'accouplement comprend un corps d'accouplement (10) qui peut être logé dans l'espace d'accouplement (3a, 3b) afin de fixer le second moyen d'accouplement au moyen d'accouplement du composant de bicyclette (11).
